# EUROPEAN PATENT APPLICATION

(11) **EP 1 593 585 A1**
(43) Date of publication of application: **09.11.2005**
(21) Application number: 05252749.6
(22) Date of filing: 04.05.2005
(51) Int. Cl.: B62D 21/15, B60R 19/34

(54) **Crash structure for automotive purposes**

(30) Priority: 04.05.2004 EP 04252581; 23.06.2004 EP 04253766
(71) Applicant: Corus Staal BV, 1970 CA Ijmuiden (NL)
(72) Inventor: Baldwin, Michael John, Warwick Warwickshire, CV34 6LH (GB)
(74) Representative: Kruit, Jan

(57) **Abstract**

The invention relates to an automotive vehicle comprising a body in white, the body in white having a front part with a pair of front longitudinals (2), a crash structure (3) being present behind a front bumper of the automotive vehicle to absorb crash energy at a medium to high speed collision.

According to the invention the crash structure comprises a crash element (3) that is housed in a front longitudinal (2), such that at a medium to high speed collision first the crash element (3) is crushed and thereafter the front longitudinal (2) is crushed, so as to reduce the likelihood of injury or death of the occupants of the automotive vehicle.

The invention also relates to such a crash structure.

## Description

The invention relates to an automotive vehicle comprising a body in white, the body in white having a front part with a pair of front longitudinals, a crash structure being present behind a front bumper of the automotive vehicle to absorb crash energy at a medium to high speed collision.

Nowadays great emphasis is placed on vehicle crash safety, and crash testing of vehicles is used for new cars to determine the occupant safety. One of the tests relates to frontal collision, and the requirements for occupant safety during frontal collision tend to increase year by year.

Most cars nowadays are manufactured as a body in white, to which the outer panels and the power train are attached. Such a body in white possesses front longitudinals or front rails, to which the front bumper is attached. In case of a crash the front longitudinals should take up the crash energy and be crushed, while the crash forces are transmitted to the floor and sides of the vehicle, such that the occupants remain unharmed. Between the front bumper and the front longitudinals crush boxes (also known as crush cans) can be present, but such crush boxes can take up only a limited amount of crash energy, and thus will only be useful for limiting damage at low speed impacts.

It is a disadvantage of the present vehicles that at intermediate speeds the front longitudinals are crushed when the vehicle crashes, because the front longitudinals are costly to repair. It is disadvantageous that the front longitudinals are crushed at intermediate speed, because in that way the vehicle parts that are placed between the front longitudinals will be forced to the interior of the vehicle. This might be harmful to the occupants. Moreover, for smaller vehicles the front longitudinals are short, so the crash energy of a crash at high speed has to be dissipated over a short length. The deceleration will thus be high and the deceleration forces on the occupants will be high too.

It is an object of the invention to provide a vehicle with an improved crash structure so as to enhance the safety of the automotive vehicle.

It is another object of the invention to provide a vehicle with a crash structure that can absorb crash energy in a more reliable and predictable manner than the present crash structures.

It is yet another object of the invention to provide a vehicle with a crash structure that provides a lower deceleration for a crash at high speed than the present crash structures so as to enhance the safety for the occupants of the automotive vehicle.

One or more of these objects is reached with an automotive vehicle comprising a body in white, the body in white having a front part with a pair of front longitudinals, a crash structure being present behind a front bumper of the automotive vehicle to absorb crash energy at a medium to high speed collision, wherein the crash structure comprises a crash element that is housed in a front longitudinal, such that at a medium to high speed collision first the crash element is crushed and thereafter the front longitudinal is crushed, so as to reduce the likelihood of injury or death of the occupants of the automotive vehicle.

By providing the crash element that has to take up the crash energy inside the front longitudinal a more stable and repeatable crash structure is provided.

Moreover, due to the providing of the crash element inside the front longitudinal more crush distance is available. Usually the front longitudinal is crushed over only 75% of it's length. When a crash element is used inside the front longitudinal in accordance with the invention, a larger crush length is provided. The crash structure according to the invention thus can take up the same crash energy over a longer distance, resulting in lower deceleration forces. Alternatively the deceleration forces can remain as high as usual until now, and the crash energy absorbed can be higher. In both situations the safety of the occupants is enhanced, in the first situation for medium speed collisions, in the second situation for high speed collisions. A combination of these two effects can also be reached.

According to a preferred embodiment, the crash structure is designed such that the crash structure and the front longitudinal are crushed at speeds of substantially 15 kilometre per hour and above. The crash structure of the invention is thus not designed for low-speed collisions so as to limit the damage at the car, as crush cans intend to do. The crash element is designed to enhance the safety of the occupants of the automotive vehicle.

According to a further preferred embodiment, the crash structure is designed to start being crushed at a speed of substantially 15 kilometre per hour and above, and the front longitudinal is designed to start being crushed at a speed between 30 and 50 kilometre per hour. At these speeds, the crush energy taken up by the crush element is optimised for high speed collisions, where the likelihood of injury or death of the occupants is maximal.

Preferably, the crash structure comprises force transmission means connecting the front bumper with the crash element. The force transmission means transmit the collision force on the front bumper during a crash to the crash element inside the front longitudinal, so as to crush the crash element.

According to a preferred embodiment the force transmission means comprise a tubular strut that is guidable inside the front longitudinal. The tubular strut connects the front bumper to the crash element and transmits the collision force on the bumper to the crash element in case of a collision. Guiding the strut inside the front end of the front longitudinal provides a good crushing of the crash element, especially when the collision is not exactly frontal.

Preferably, the tubular strut is guidable through two guiding means connected inside the front longitudinal. The two guiding means, for instance two guiding bushes, provide an excellent guiding of the tubular strut and thus a reliable and constant crush force of the crash element, also when the collision takes place at an angle.

According to a preferred embodiment the force transmission means are releasably connected to the crash element such that the connection is released above a predetermined collision stroke. If the crash energy to be absorbed is high enough, in this way the crash element is crushed over a predetermined length and is then disconnected from the tubular strut. If more crash energy is to be absorbed, the front end of the front longitudinal can now be crushed to absorb the remainder of the crash energy.

Preferably the force transmission means are releasably connected to the crash element by tapered wedges. The tapered wedges provide an easy and reliable releasable connection between the force transmission means and the crash element.

According to a preferred embodiment the crash element is constructed such that the force to crush the crash element increases to a constant predictable level during collision. Due to the constant predetermined level of the crush force, the deceleration will reach a predetermined level.

Preferably the crash element is replaceable. After a crash in which only the crash element of the crash structure has been crushed, only the crash element has to be replaced when the crash element is replaceable, and not the crash structure in total. The costs savings of this measure can be high.

According to a preferred embodiment the crash element is essentially tubular. A tubular element is easy to mount and easy to produce.

Preferably the crash element is made of metal. Metal can take up a lot of energy as compared to its weight and is easy to produce a crash element from. It will however be understood that it is also possible to produce the crash element from other materials, such as fibre reinforced plastic.

The crash element preferably has walls having a corrugating longitudinal section. During crushing of the crash element the corrugations will fold up while absorbing crush energy, thus reducing the length of the crash element essentially without changing the diameter of the crash element. The deformed crash element will thus not get stuck inside the front longitudinal and can easily be removed from the front longitudinal.

According to a preferred embodiment, the crash energy absorbed by the crush element is tuneable to the space available in the front part of the automotive vehicle and to the weight of the automotive vehicle. Due to the fact that the energy absorbed by the crash element is tuneable, it will be possible to tune the crush energy absorbed by the crash structure according to the invention to the weight of the automotive vehicle in which the crash structure is mounted and thus to each model variant of a certain automotive model of a certain car manufacturer. This is a great advantage over the present longitudinals that are used indiscriminately for all model variants of a certain model, and thus are either too stiff for the lighter model variants or too weak for the heavier model variants. The crash element is also tuneable to the space available in the front longitudinal, because the length and the diameter of the crash element are variables in the design of the crash structure.

The invention also relates to a crash structure for use in an automotive vehicle, the automotive vehicle comprising a body in white, the body in white having a front part with a pair of front longitudinals, wherein the crash structure comprises a crash element that is suitable to be housed in a front longitudinal of the body in white. This crash structure can be used in the automotive vehicle as described above, and can have all the additional features as described for the automotive vehicle above.

The invention will be elucidated referring to the accompanying drawing.
Fig. 1 shows, in a schematic way and partially cut away, a three-dimensional view of a preferred embodiment of the crash structure with the crash element according to the invention inside a front longitudinal.
Fig. 2 shows the crash structure of Fig. 1 after it has been crushed.
Fig. 3 shows, in a schematic way, the crush distance V versus force F diagram of an automotive vehicle having a conventional front longitudinal.
Fig. 4 shows, in a schematic way, the crush distance versus force diagram of the crush element according to the invention.
Fig 5 shows a comparison between Fig 3 and Fig 4.

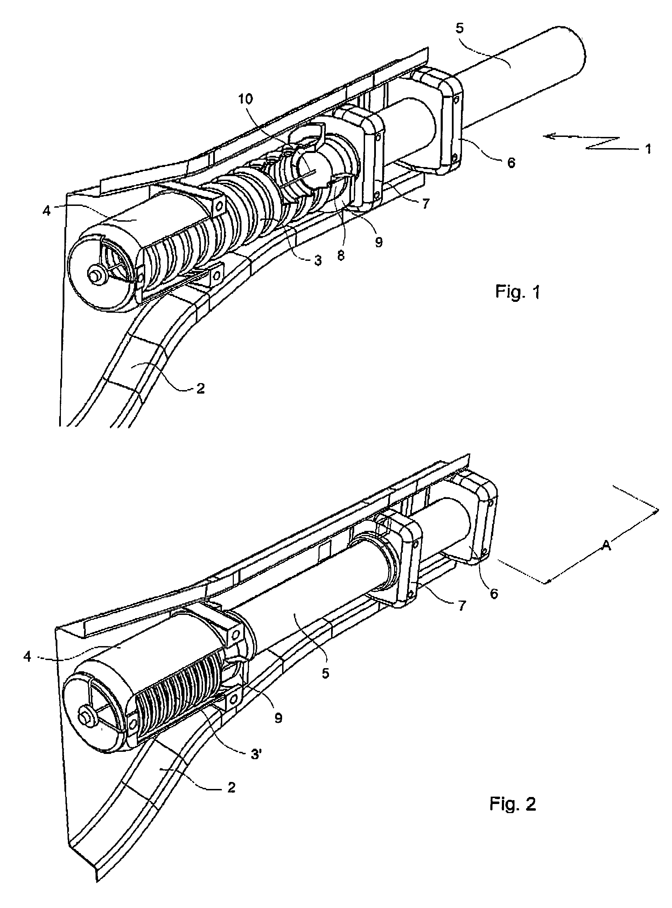

Fig. 1 shows a preferred embodiment of the crash structure 1 according to the invention housed in a front longitudinal 2 of which only one half is shown.

The crash structure 1 as present in an automotive vehicle that has not crashed consists of a crash element 3 of which one end has been placed in a mounting bush 4. The crash element and the mounting bush are represented partially cut away to show the interior thereof. The mounting bush 4 has been connected to the front longitudinal. The other end of the crash element 3 has been connected to a tubular strut 5, which strut has been guided through two guide bushes 6, 7 which are connected to the front longitudinal. The tubular strut 5 has a smaller diameter than the inside diameter of the crash element 3. The tubular strut 5 has been releasably connected to the crash element 3 by means of segmented wedges 9 that are mounted between a tapered sleeve 8 that is part of the crash element 3 and the tapered end of the tubular strut 5. The segmented wedges 9 have a wedge shape such that they will be forced out of the space between the tapered end of the tubular strut 5 and the tapered sleeve 8 of the crash element 3 when the force exerted on the tapered wedges 9 exceeds a pre-determined value. An assembly wire 10 has been attached between the mounting bush 4 and the tubular strut 5 so as to hold the assembly together during the time no crash has taken place; it is however possible to dispense with an assembly wire. The end of the tubular strut 5 protruding from the front longitudinal has been connected to the bumper (not shown) of the automotive vehicle in which the crash structure is used.

The operation of the crash structure 1 will be elucidated making use of Fig. 1 and also of Fig. 2.

When the automotive vehicle, in which the crash structure as described above has been placed in both front longitudinals, is subject to a frontal collision, the tubular strut 5 is pushed into the interior of the front longitudinal 4 while being guided by the guide bushes 6, 7. During this act the crash element 3 is crushed, because the end of the crash element 3 that rests in the mounting bush 4 cannot move. The crash element 3 is crushed during the collision until the tubular strut 5 has made a full stroke as indicated in Fig. 2 with the distance A. At that position the segmented wedges 9 contact the mounting bush 4, as also indicated in Fig. 2, and the crash element 3 is fully crushed, as indicated by crushed crash element 3'.

It will be understood that the tubular strut 5 will only make the full stroke A when the crash energy to be absorbed as a result of the collision is high enough to make it necessary that the crash element 3 is fully crushed.

If after the crash element has been fully crushed as shown in Fig. 2 there is still collision energy that has to be absorbed, the tubular strut 5 is disconnected from the crushed crash element 3' because the segmented wedges 9 will be forced out of the space between the tapered end of the tubular strut 5 and the tapered sleeve 8 of the crushed crash element 3' since the force exerted on the segmented wedges 9 will be higher now the crushed crash element 3' cannot be crushed further. After the segmented wedges 9 have been forced out, the tubular strut 5 can freely move inside the crashed crush element 3'. Since the full stroke A of the tubular strut 5 has been used, the front end of the front longitudinal will be used to absorb the remaining crash energy.

The crash structure 1 as described above has the advantage that the crash element 3 is a separate element that can be easily replaced after a collision with a low to moderate speed impact, since in such cases only the crash element 3 will be crushed. The crash structure as described above also has the advantage that the crash element 3 is a comparatively simple element that can be manufactured cost-effectively in relatively low numbers. Due to this possibility, it will be possible to provide a crash element 3 for each model variant of a car, such that the crash element 3 is optimal for each different model in view of its weight.

A simple and reliable form for the crash element 3 is a tube with an essentially circular cross section, as shown in Fig 1 and 2, in which the wall of the tube is corrugated in longitudinal section. The crush energy absorbed by the crash element 3 can be tuned by the length, the diameter, the wall thickness, the length of each corrugation, the difference between the inner diameter and outer diameter of the corrugations, and the type of steel. The crash element can also have a tailored thickness, in which part of the length of the crash element has a constant thickness, for instance a thickness of 3 mm, and the remainder of the crash element has a different thickness, for instance a thickness between 3 and 1.5 mm. The crash element can for instance be formed from a tube having a constant cross-section using hydro-forming.

Fig, 3 shows the distance V - force F diagram for the prior art situation in which the front longitudinal of a vehicle is used to absorb most of the crash energy. After an initial small force (to collapse the bumper beam and the crash can) over a distance V₁ the force then rises to a higher level; the force remains at this level over a distance Vₘ. In the event of a high speed crash the force rises to a still higher level over a distance which has at most a length of Vₕ.

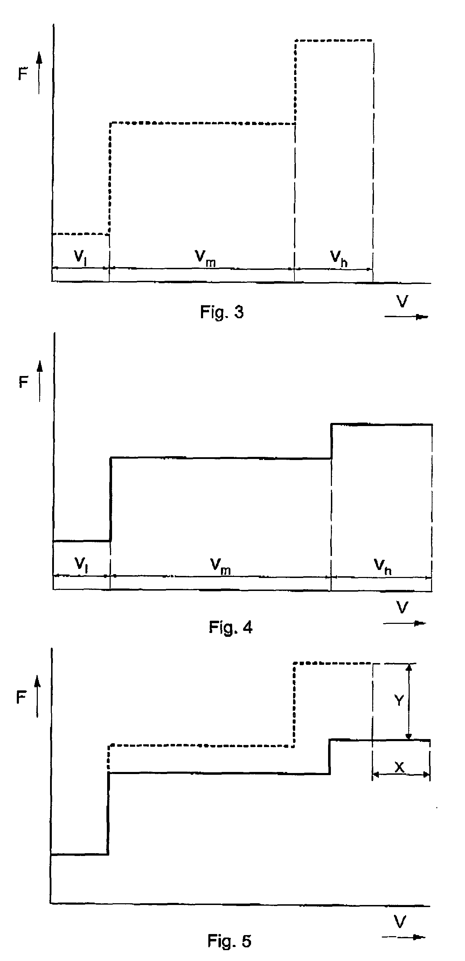

Fig. 4 shows the distance V - force F diagram according to the invention. The same amount of crash energy is absorbed at a lower force level over a greater distance Vₘ now the crash element according to the invention is used, reducing the likelihood of injury to the occupants. Furthermore, in a high speed crash the force levels over the distance Vₕ are also low.

Fig. 5 shows both situations in one diagram. Here, the same amount of collision energy is absorbed, but the maximal deceleration force is far lower, improving the deceleration forces on the occupants of the automotive vehicle during collision. It can be seen that the extra crush distance (X) allows for a decrease in the deceleration force (Y).

The person skilled in the art will understand that many variations on the preferred embodiment as described above are possible. It will for instance also be possible to use a crash element having an essentially square cross-section, or a crash element having a tapered form. It will also be possible to use another replaceable connection between the crash element 3 and the tubular strut 5 instead of the segmented wedges and the tapered sleeve.

## Claims

1. Automotive vehicle comprising a body in white, the body in white having a front part with a pair of front longitudinals, a crash structure being present behind a front bumper of the automotive vehicle to absorb crash energy at a medium to high speed collision, **characterised in that** the crash structure comprises a crash element that is housed in a front longitudinal, such that at a medium to high speed collision first the crash element is crushed and thereafter the front longitudinal is crushed, so as to reduce the likelihood of injury or death of the occupants of the automotive vehicle.

2. Automotive vehicle according to claim 1, wherein the crash structure is designed such that the crash structure and the front longitudinal are crushed at speeds of substantially 15 kilometre per hour and above.

3. Automotive vehicle according to claim 1 or 2, wherein the crash structure is designed to start being crushed at a speed of substantially 15 kilometre per hour and above, and the front longitudinal is designed to start being crushed at a speed between 30 and 50 kilometre per hour.

4. Automotive vehicle according to any one of claims 1 - 3, wherein the crash structure comprises force transmission means connecting the front bumper with the crash element.

5. Automotive vehicle according to claim 4 wherein the force transmission means comprise a tubular strut that is guidable inside the front longitudinal.

6. Automotive vehicle according to claim 5, wherein the tubular strut is guidable through two guiding means connected inside the front longitudinal.

7. Automotive vehicle according to claim 4, 5 or 6, wherein the force transmission means are releasably connected to the crash element such that the connection is released above a predetermined collision stroke.

8. Automotive vehicle according to claim 7, wherein the force transmission means are releasably connected to the crash element by tapered wedges.

9. Automotive vehicle according to any one of claims 1 - 8, wherein the crash element is constructed such that the force to crush the crash element increases to a constant predictable level during collision.

10. Automotive vehicle according to any one of claims 1 - 9, wherein the crash element is replaceable.

11. Automotive vehicle according to any one of claims 1 - 10, wherein the crash element is essentially tubular,

12. Automotive vehicle according to any one of claims 1 - 11, wherein the crash element is made of metal.

13. Automotive vehicle according to any one of claims 1 - 12, wherein the crash element has walls having a corrugating longitudinal section.

14. Automotive vehicle according to any one of claims 1 - 13, wherein the crash energy absorbed by the crush element is tuneable to the space available in the front part of the automotive vehicle and to the weight of the automotive vehicle.

15. Crash structure for use in an automotive vehicle, the automotive vehicle comprising a body in white, the body in white having a front part with a pair of front longitudinals, **characterised in that** the crash structure comprises a crash element that is suitable to be housed in a front longitudinal of the body in white.

16. Crash structure according to claim 15, wherein the crash element has the features according to any one of the claims 2 - 14.
